# EUROPÄISCHE PATENTSCHRIFT

(11) **EP 1 807 937 B1**
(45) Veröffentlichungstag und Bekanntmachung des Hinweises auf die Patenterteilung: **20.01.2010**
(21) Anmeldenummer: 05772000.5
(22) Anmeldetag: 26.07.2005
(51) Int. Cl.: H04B 1/16, H04B 7/04

(54) **SENDE- UND/ODER EMPFANGSVERFAHREN MIT HOHER KANALKAPAZITÄT, SENDE- UND/ODER EMPFANGSVORRICHTUNG SOWIE MOBILES ENDGERÄT**
TRANSMISSION AND/OR RECEPTION PROCESS WITH HIGH CHANNEL CAPACITY, TRANSMITTER AND/OR RECEIVER, AND MOBILE TERMINAL
PROCEDE D'EMISSION ET/OU DE RECEPTION A CAPACITE DE CANAUX ELEVEE, DISPOSITIF D'EMISSION ET/OU DE RECEPTION ET TERMINAL MOBILE

(30) Priorität: 25.10.2004 DE 102004051835
(43) Veröffentlichungstag der Anmeldung: 18.07.2007
(73) Patentinhaber: Palm, Inc., Sunnyvale, CA 94085-2801 (US)
(72) Erfinder: LILLIE, Frank, 24259 Westensee (DE)
(74) Vertreter: Samson & Partner
(86) Internationale Anmeldenummer: PCT/EP2005/053626
(87) Internationale Veröffentlichungsnummer: WO 2006/045645

(56) Entgegenhaltungen:
- EP-A- 0 361 350
- EP-A- 0 656 693
- US-A- 4 777 655
- US-A- 5 649 314
- US-A- 5 748 103

## Beschreibung

Die vorliegende Erfindung betrifft ein Sende- und/oder Empfangsverfahren mit hoher Kanalkapazität, eine Sende- und/oder Empfangsvorrichtung sowie ein mobiles Endgerät zur Sprach- und Datenkommunikation.

Ohne Verzicht auf andere Einsatzmöglichkeiten der vorliegenden Erfindung im Bereich der Sprach- und/oder Datenkommunikation über eine Luftschnittstelle wird nachfolgend nur auf eine Anwendung im Mobilfunksektor eingegangen werden. Produkte im PC-, PDA- und/oder Mobilfunksektor sind als komplette Endgeräte, wie auch als Einsteck- bzw. Erweiterungseinheiten bekannt. Sie stehen unter einem hohen Preisdruck, wobei sich dieser Anwendungsbereich durch besonders hohe Anforderungen an die Signalqualität bei sehr geringem Raumangebot für eine entsprechende Schaltung und strenge Restriktionen hinsichtlich des Energiebedarfs auszeichnet. Dementsprechend werden Verfahren und Vorrichtung der eingangs genannten Art auch in den sehr klein bauenden Kommunikationsgeräte nach dem Global System for Mobile Communication GSM und dem Unified Mobile Telecommunications System UMTS-Standard Anwendung finden.

Systemüberlegungen für Kommunikationssysteme und Mobilfunkgeräte jenseits der 3. Generation von Mobilfunksystemen gehen zur Erhöhung der nutzbaren Kanalkapazitäten u.a. in die Richtung von Mehr-Sender- und/oder Mehr-Empfänger-Systemen. Hierbei wird die mögliche übertragbare Datenrate heraufgesetzt, indem man eine weitere Dimension, nämlich den Raum, durch Mehrwegeausbreitung ausnutzt. Diese Verfahren sind unter den Namen
- Multiple Input Multiple Output, kurz MIMO,
- Single Input Multiple Output, kurz SIMO, und
- Multiple Input Single Output, kurz MISO aus der Literatur bekannt. Sie verwenden in der Regel mehrere komplette Sende- und Empfangspfade, wobei diese Pfade in der digitalen Signalverarbeitung dann gemeinsam verrechnet werden. Dementsprechend wird für jeden Übertragungspfad z.B. eine Empfangskette mit Antenne, Vorverstärker, Mischer, Filter und A/D-Wandler benötigt. Allen Systemen, die nach dem MIMO-Prinzip arbeiten, ist gemeinsam, dass unterschiedliche Datenströme auf der selben Frequenz und zur gleichen Zeit in einem Kanal übertragen werden, wobei dieser Kanal hinsichtlich der dafür vorgesehenen Bandbreite üblicherweise für eine SISO-Anwendung ausgelegt ist.

Die Zusammensetzung oder Trennung der Datenströme erfolgt auf algorithmischer Weise sende- und empfangsseitig in der jeweiligen Signalverarbeitung. Es gibt MIMO-Systemvorschläge, die mit oder ohne Rückkopplung von Empfänger zum Sender arbeiten. Bei den Systemen mit Rückkopplung werden die Eigenschaften des MIMO- Übertragungskanals zu einem Zeitpunkt T1 geschätzt, dann die Kanalinformation über einen Rückkanal zum Sender übertragen, so dass dieser eine entsprechende Vorverzerrung des Sendesignals, welches zum Zeitpunkt T2 ausgesendet wird, mit dem Ziel einer Maximierung des Datendurchsatzes vornehmen kann. Als Ergebnis der Kanalschätzung ergibt sich eine komplexe Matrix, deren Rang der Anzahl der Übertragungspfade entspricht, die aus Teil-Übertragungskanälen einen MIMO-Übertragungskanal bilden. Hierbei wird davon ausgegangen, dass sich die Ausbreitungsbedingungen zwischen den Zeitpunkten T1 und T2 nicht wesentlich ändern, so dass die Kanalschätzung noch korrekt ist. Diese Verfahren sind aus der Literatur prinzipiell bekannt.

In einer im Folgenden vorgeschlagenen Anwendung sind nun idealer Weise mehrere komplette Empfangspfade in einem Chip integriert. Generell wird davon ausgegangen, dass man in einem System arbeitet, in dem eine Signalverarbeitung Phasen temporärer Abschaltungen unterworfen wird. Mit anderen Worten wird also ein System betrachtet, welches mindestens zum Teil zeitweise abgeschaltet wird. Der Umfang der Abschaltung kann hierbei je nach Ausführungsform variieren. Hierdurch wird das Ziel verfolgt, einen effektiven Beitrag zur Senkung von internen und durch ungenutzte Sendeleistung hervorgerufenen Interferenzen innerhalb einer Funkzelle zu leistet. Zudem können durch dieses Vorgehen in den Empfangspausen zum Zweck des Stromsparens eine oder mehrere Baugruppen im Empfänger abgeschaltet werden. Selbstverständlich können auch Sender dementsprechend ausgebildet und betrieben werden.

Es ist die Aufgabe der vorliegenden Erfindung, ein Verfahren, eine Vorrichtung und ein mobiles Endgerät der eingangs genannten Art zu schaffen, welche jeweils die Zuverlässigkeit einer Kommunikation mit hoher spektraler Effizienz unter Nutzung einer Mehrwege-Ausbreitung verbessert.

EP 0 656 693 A2 betrifft den Betrieb von mobilen Endgeräten in einer gemeinsamen Kommunikationsumgebung, wobei die mobilen Endgeräten jeweils eine einzelne Sende/Empfangseinheit aufweisen. Die mobilen Endgeräte können abhängig von empfangsabhängigen Kriterien zeitweise abgeschaltet werden. Beim Wiedereinschalten werden dem PLL-Teil der jeweiligen Sende/Empfangseinheit auf herkömmliche Weise Werte bereitgestellt, die beim Abschalten verloren gegangen sind, wie z.B. Frequenzteilungswerte.

US 5,748,103 betrifft eine Kommunikationsumgebung mit mehreren mobilen Geräten mit jeweils einer einzelnen Sende/Empfangseinheit und einer zentralen Einrichtung mit zwei Sende/Empfangseinheiten. Die Sende/Empfangseinheiten der mobilen Geräte können temporär abgeschaltet werden, die Sende/Empfangseinheit der zentralen Einrichtung nicht. Um beim Wiedereinschalten einer Sende/Empfangseinheit zu verhindern, dass keine zu empfangenden Signale verloren gehen, wird die Sende/Empfangseinheit eingeschaltet, bevor die eigentliche Signalverarbeitung beginnt. Der Zeitraum zwischen Wiedereinschalten und Signalverarbeitungsbeginn wird zu Initialisierung der einzelnen Sende/Empfangseinheit verwendet.

Diese Aufgabe wird durch ein Verfahren der eingangs genannten Art mit den Merkmalen von Anspruch 1 erfindungsgemäß dadurch gelöst, dass beim Einschalten der Signalverarbeitung eine Initialisierung der jeweiligen Mischereihheiten durchgeführt wird. Eine erfindungsgemäße Vorrichtung nach Anspruch 8 weist als Lösung der vorstehenden Aufgabe eine Einrichtung zur Initialisierung der jeweiligen Mischereinheiten auf.

Es muss nun bei einem MIMO-System gewährleistet sein, dass nach einem wiedereinschalten der Signalverarbeitungsmittel nicht nur die Frequenzstabilität rechtzeitig erreicht ist, wie es bei derzeit aktuellen Systemen der Fall ist. Es muss vielmehr auch darauf geachtet werden, dass die Phasenbeziehung der einzelnen Mischfrequenzen zueinander derjenigen von dem Zeitpunkt T1 der temporären Abschaltung entspricht. Anderenfalls ist die ganze Kanalschätzung und Vorverzerrung etc. ungültig. In den derzeitigen SISO-Systemen kann diese Phase dagegen zufällig verschiedene Werte annehmen. Bei den herkömmlichen für SISO-Anwendungen ausgelegten Chipsätzen ist

dieses Problem nicht vorhanden, es muss hier nur die Frequenzstabilität gewährleistet sein. Hierzu reicht es jedoch aus, eine Einschwingzeit des Synthesizers zu beachten.

Vorteilhafte Weiterbildungen der Erfindung ergeben sich aus den Merkmalen der jeweiligen abhängigen Ansprüche. Als Weiterbildung der Erfindung ist die besondere Form einer temporären Abschaltung in Form eines Sendens und/oder Empfangens in definierten Zeitschlitzen vorgesehen, wie es in SISO-Systemen z.B. bereits bei
- Global System for Mobile Communication, kurz GSM,
- Enhanced Data Rates for GSM Evolution, kurz EDGE,
- oder aber in bestimmten Modi innerhalb des UMTS-Standards
realisiert ist, um nur einige Beispiele zu nennen. Hier gilt es nun bei sehr engen zeitlichen Vorgaben nach einem Wiedereinschalten der Signalverarbeitungsmittel zu einem Zeitpunkt T2, also zum Empfang des nächsten Zeitschlitzes, darauf zu achten, dass die Phasenbeziehung der einzelnen Mischfrequenzen zueinander derjenigen von dem Zeitpunkt T1 der temporären Abschaltung entspricht. In jedem anderen Fall ist in einem MIMO-System, mit oder ohne Rückkanal, eine vorangehende Kanalschätzung mit entsprechenden Anpassungen und Vorverzerrungen etc. ungültig und führt zu unbrauchbaren Ergebnissen.

Besonders vorteilhaft ist die Verwendung einer Initialisierungsschaltung in Form einer Reset-Schaltung, die gleichzeitig alle Mischereinheiten der parallel angelegten Daten- Verarbeitungspfade anspricht. Damit zählen alle Mischereinheiten synchronisiert ab dem selben, durch einen Reset vorgegebenen Zeitpunkt. Bei dem Reset handelt es sich um ein digitales Reset.

In einer bevorzugten Ausführungsform der Erfindung findet ein definierter Preload statt. Alle Mischereinheiten der parallel angelegten Daten-Verarbeitungspfade erhalten auf diese Weise zeitgleich einen identischen Initialisierungswert.

In einer Weiterbildung der Erfindung werden innerhalb der jeweiligen Mischereinheiten, als Baugruppe betrachtet, die Teiler bzw. Frequenzumsetzer angesteuert. In einer im Weiteren vorgeschlagenen Architektur einer erfindungsgemäßen Vorrichtung speist ein Lokaloszillator, der mit Hilfe einer Synthesizerschaltung auf eine Frequenz F1 eingestellt wird, die zum Heruntermischen der Empfangssignale vorgesehenen mehreren Mischereinheiten. Es ist dabei eine an sich bekannte Technik, dass der Lokaloszillator auf einer höheren Frequenz schwingt als die eigentliche Mischfrequenz. Örtlich erst direkt vor den Mischerzellen wird die Lokaloszillator-Frequenz F1 auf eine tatsächliche Mischfrequenz F2 durch Teiler umgesetzt bzw. heruntergeteilt. Diese räumliche Anordnung in unmittelbarer Nachbarschaft wird zur Minimierung von Störungen gewählt. Es erhalten mithin innerhalb der Mischer-Baugruppen die Teiler gleichzeitig einen Reset, oder sie werden durch einen Preload definiert auf gemeinsame Startwerte gesetzt.

In einer Ausführungsform der Erfindung werden als Frequenzumsetzer sog. regenerative Teiler eingesetzt, die auch eine beliebig einstellbare unganzzahlige Teilung der Lokaloszillatorfrequenz vornehmen können, wie u.a. in der WO 01015313 A1 offenbart. Dahingegen sind übliche Teiler als Zähler, die eine vorgegebene Teilung beispielsweise über eine Überlaufregelung realisieren. Hierdurch ist nur eine ganzzahlige Teilung 1:N mit N = 2, 3, 4, 5, .... möglich.

Ein Reset erfolgt in einem derartigen regenerativen Teiler über einen Schalter in mindestens einem Rückkopplungsast. Der Schalter wird durch den Reset-Impuls definiert geschlossen, so dass der Teiler sofort zu arbeiten beginnt, und damit der Mischer als gesamte Baugruppe.

Besonders vorteilhaft wird ein erfindungsgemäßes Verfahren und eine entsprechende Vorrichtung in einer Direct Conversion Architektur eingesetzt, die für Sende- wie auch Empfangseinheiten einsetzbar ist. Es wird davon ausgegangen, dass der Oszillator nicht direkt auf der Empfangs- und/oder Sendefrequenz schwingt, sondern erst direkt vor den jeweiligen Mischereinheiten auf die eigentliche Frequenz heruntergeteilt wird. Dieses Vorgehen reduziert Nebeneffekte und Störungen. Es wird dementsprechend je eine Teilerstufe pro Mischereinheit vorgesehen, wobei die Teilerstufe erfindungsgemäß mit einem Synchronisationsnetzwerk beschaltet ist und zur Synchronisation angesteuert wird.

Die vorliegende Erfindung betrifft auch ein mobiles Endgerät, insbesondere ein Mobilfunkgerät zur Sprach- und/oder Datenkommunikation, das eine erfindungsgemäße Vorrichtung aufweist.

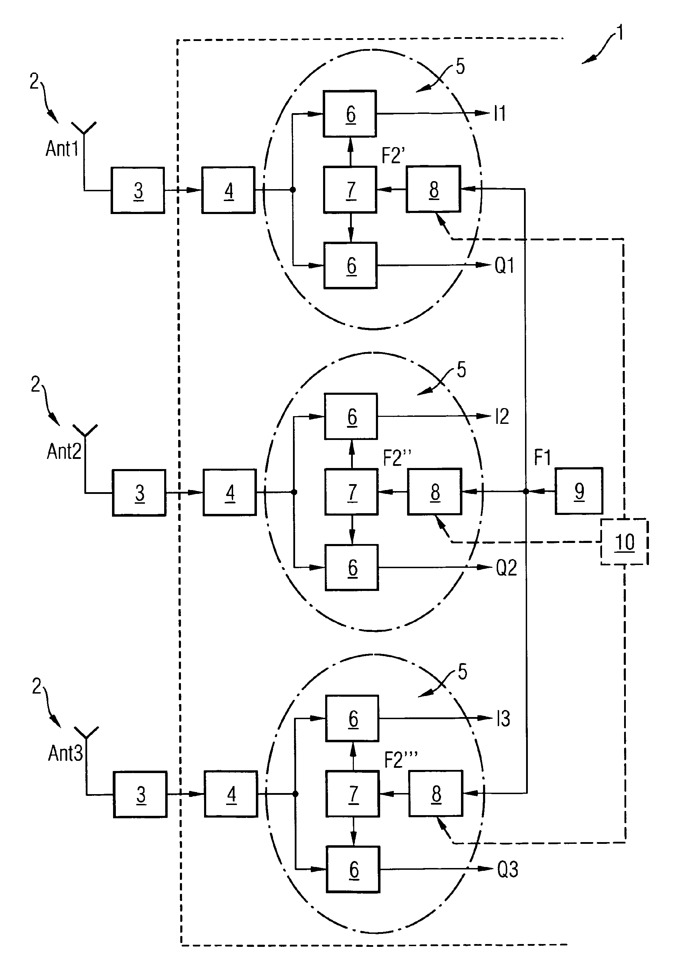

Weitere Vorteile eines erfindungsgemäßen Verfahrens und einer Vorrichtung zur Umsetzung eines erfindungsgemäßen Verfahrens, das insbesondere Bestandteil eines Mobilfunk-Endgerätes ist, werden nachfolgend unter Bezug auf die Darstellung eines Ausführungsbeispieles anhand der Zeichnung näher beschrieben.

Die Figur der Zeichnung zeigt ein Blockschaltbild eines MIMO-Empfängers 1. Hierbei wird die mögliche übertragbare Datenrate heraufgesetzt, indem man mit dem Raum eine weitere Dimension durch gezielte Mehrwegeausbreitung ausnutzt. Der MIMO-Empfänger 1 weist dementsprechend im vorliegenden Beispiel drei voneinander getrennte, vollständig ausgebildete Empfangspfade 2 auf. Die Schaltung jedes der Empfangspfade 2 besteht aus einer jeweiligen Antenne Ant1, Ant2, Ant3 folgend aus Eingangsfilter 3, Vorverstärker 4, Mischereinheit 5 mit zwei Mischern 6, Phasenschieber 7 und Frequenzumsetzer 8 sowie einem Oszillator 9. Ein Empfangssignal gelangt im Zuge einer Mehrwegeausbreitung jeweils über eine der Antennen Ant1, Ant2, Ant3, Eingangsfilter 3 und Vorverstärker 4 zu den jeweiligen komplexen Mischern 6. Es ist dabei nur ein Oszillator 9 vorgesehen, der alle Empfangspfade 2 gemeinsam speist. Das Signal des Oszillators 9 wird nach Frequenzumsetzung in einem Teiler 8 je Empfangspfad 2 durch den Phasenschieber 7 in zwei zueinander orthogonal stehende Signale aufbereitet, die den eigentlichen Mischern 6 zugeführt werden. Dort wird es mit Hilfe einer durch die Teiler 8 festgelegten Mischfrequenz F2', F2" und F2''' in eine Zwischenfrequenzlage ZF umgesetzt. Diese Zwischenfrequenzlage ZF ist im vorliegenden Beispielfall zu Null gewählt worden, es liegt also eine sog. Direct-Conversion-Architektur vor.

In einer Mischereinheit 5 bzw. Mischerstufe liegt ein Frequenzumsetzer 8 direkt vor dem jeweiligen Mischer 6, die mit einer Frequenz F1 des Oszillators 9 gespeist wird und eine Frequenz F2 ausgibt. Der Frequenzumsetzer 8 bildet zusammen mit dem Mischer 6 und dem Phasenschieber 7 als Mischereinheit 5 quasi eine Baueinheit, die zur Minderung von Störungseinflüssen auch als Schaltungsteile räumlich eng benachbart auf einem Chip angeordnet sind.

Das sich ergebende Ausgangssignal kann je Empfangspfad 2 mit einer Inphase-Komponente I1, 12, 13 und einer Quadraturkomponente Q1, Q2, Q3 beschrieben werden. Eine weitere Verarbeitung der drei Bestandteile des Ausgangssignals kann an dieser Stelle außer Betracht bleiben.

Es wird nun erfindungsgemäß gewährleistet, dass durch eine Initialisierungsschaltung 10 die Phasenbeziehung der einzelnen Mischfrequenzen F2', F2" und F2"' zueinander immer gleich ist. Dies gilt speziell nach dem Power-up des Funkteils zum Empfang des nächsten Zeitschlitzes in einem TDMA-Verfahren, aber selbstverständlich auch nach einer Abschaltphase beim Wiedereinschalten des MIMO-Empfängers 1. Die Initialisierungsschaltung 10 in Form einer Reset-Schaltung spricht gleichzeitig alle Mischereinheiten 5 der parallel angelegten Daten-Verarbeitungspfade 2 an. Damit zählen alle Mischereinheiten 5 synchronisiert ab dem selben, durch einen jeweiligen Reset vorgegebenen Zeitpunkt. Bei dem Reset handelt es sich um ein digitales Reset, der im vorliegenden Beispielfall als definierter Preload eines vorgegebenen Wertes in den Frequenzumsetzern 8 stattfindet. Alle Mischereinheiten 5 der parallel angelegten Daten-Verarbeitungspfade 2 erhalten auf diese Weise zeitgleich einen identischen Initialisierungswert.

Vorstehend wurde von Mischereinheiten 5 gesprochen, da innerhalb der jeweiligen Mischereinheiten 5, als Baugruppe betrachtet, die Teiler bzw. Frequenzumsetzer 8 angesteuert werden. In einer im Weiteren vorgeschlagenen Architektur einer erfindungsgemäßen Vorrichtung speist ein Lokaloszillator 9, der mit Hilfe einer Synthesizerschaltung auf eine Frequenz F1 eingestellt wird, die zum Heruntermischen der Empfangssignale vorgesehenen mehreren Mischerpaare. Es ist gängige Technik, dass der Lokaloszillator 9 auf einer höheren Frequenz schwingt als die eigentliche Mischfrequenz. Örtlich erst direkt vor den Mischerzellen 6 wird die Frequenz F1 auf eine tatsächliche Mischfrequenz F2 durch Teiler 8 umgesetzt bzw. heruntergeteilt. Diese räumliche Anordnung wird zur Minimierung von Störungen gewählt. Es erhalten mithin innerhalb der Mischereinheiten die Teiler 8 gleichzeitig einen Reset, oder sie werden durch einen Preload definiert auf gemeinsame Startwerte gesetzt.

In diesem Ausführungsbeispiel werden als Frequenzumsetzer 8 sog. regenerative Teiler eingesetzt, die auch eine beliebig einstellbare unganzzahlige Teilung der Lokaloszillatorfrequenz vornehmen können, wie u.a. in der WO 01015313 A1 offenbart. Dahingegen sind übliche Teiler als Zähler, die eine vorgegebene Teilung beispielsweise über eine Überlaufregelung realisieren. Hierdurch ist nur eine ganzzahlige Teilung 1:N mit N = 2, 3, 4, 5, .... möglich. Ein Reset erfolgt in einem derartigen regenerativen Teiler über einen Schalter in mindestens einem Rückkoppelast. Der Schalter wird durch den Reset-Impuls definiert geschlossen, so dass der Teiler sofort zu arbeiten beginnt, und damit der Mischer als gesamte Baugruppe.

Ohne weitere zeichnerische Darstellung wird darauf hingewiesen, dass ein vorstehend beschriebenes Verfahren auch in einem MIMO-Sender und mithin auch in einer MIMO-Sende- und Empfangseinheit einsetzbar ist. In diesem Fall wären die Empfangspfade 2 als Empfangs- und/oder Sendepfade 2 ausgebildet. Die vorgeschlagene Anordnung ist in jedem Fall leicht in einer CMOS-Schaltung zu integrieren.

Die vorliegende Erfindung hat also u.a. die folgenden wesentlichen Vorteile:
- Mischfrequenzen an mehreren von nur einem Lokaloszillator gespeisten Mischereinheiten weisen stets eine bekannte und feste Phasenbeziehung zueinander auf und sind im Idealfall sogar immer alle phasengleich. So kommt es auch nach einer Pause sowie bei Anwendung eines Zeitschlitzverfahrens nach dem Wiedereinschalten zu keiner zusätzlichen Phasenverschiebung in den Ausgangssignalen der einzelnen Mischereinheiten.
- Die Kanalschätzungen können damit beibehalten werden, so dass zur Einsparung hoher Rechenleistung auch in einem MIMO-Verfahren die Kanalschätzung unter der Annahme eines sich nur langsam ändernden Kanals nicht vor jedem Wiedereinschalten durchzuführen ist.
- Direct-Konversion-Architekturen und regenerative Teiler können mit einer Synchronisierung der jeweiligen Teiler durch Reset und Preload eingesetzt werden.
- Leichte Integration in eine CMOS-Schaltung, die auch als vollständig integrierte monolithische Schaltung ausgeführt werden kann.

## Patentansprüche

1. Sende- und/oder Empfangsverfahren mit hoher Kanalkapazität für eine Mischereinheiten (5) umfassende Mehr-Sender- und/oder Mehr-Empfänger-Einheit (1), bei dem eine Signalverarbeitung Phasen temporärer Abschaltungen unterworfen wird,
**dadurch gekennzeichnet, dass**
beim Einschalten der Signalverarbeitung eine gleichzeitige Initialisierung der Mischereinheiten (5) durchgeführt wird.

2. Verfahren nach Anspruch 1, **dadurch gekennzeichnet, dass** die besondere Form einer temporären Abschaltung in Form eines Sendens und/oder Empfangens in definierten Zeitschlitzen verwendet wird.

3. Verfahren nach einem der beiden vorangehenden Ansprüche, **dadurch gekennzeichnet, dass** ein Reset-Signal verwendet wird, das gleichzeitig alle Mischereinheiten (5) der parallel angelegten Daten-Verarbeitungspfade (2) anspricht.

4. Verfahren nach einem der vorangehenden Ansprüche, **dadurch gekenntzeichnet, dass** in allen Mischereinheiten (5) ein definierter Preload verwendet wird.

5. Verfahren nach dem vorangehenden Anspruch, **dadurch gekennzeichnet, dass** innerhalb der jeweiligen Mischereinheiten (5) die Teiler (6) bzw. Frequenzumsetzer angesteuert werden.

6. Verfahren nach einem der vorangehenden Ansprüche, **dadurch gekennzeichnet, dass** als Teiler (6) bzw. Frequenzumsetzer sog. regenerative Teiler verwendet werden.

7. Verfahren nach dem vorangehenden Anspruch, **dadurch gekennzeichnet, dass** der Reset über einen Schalter in mindestens einem Rückkopplungsast eines jeden regenerativen Teilers (6) umgesetzt wird.

8. Mehr-Sender- und/oder Mehr-Empfänger-Einheit (1) hoher Kanalkapazität mit Empfangs- und/oder Sendepfaden (2) jeweils zur Verbindung mit einer von räumlich verteilt angeordneten Antennen, wobei die Mehr-Sender- und/oder Mehr-Empfänger-Einheit (1) eine zeitweise abschaltbare Signalverarbeitung aufweist,
**dadurch gekennzeichnet, dass**
die Mehr-Sender- und/oder Mehr-Empfänger-Einheit (1) zur Durchführung eines Verfahrens nach einem oder mehreren der vorhergehenden Ansprüche ausgebildet ist, indem eine Initialisierungsschaltung (10) vorgesehen ist, die mit Mischereinheiten (5) in den einzelnen Empfangs- und/oder Sendepfaden (2) zur Initialisierung der jeweiligen Mischeinheiten (5) beim Einschalten der Signalverarbeitung verbunden und ausgeführt ist, die Mischereinheiten (5) beim Einschalten der Signalverarbeitung gleichzeitig zu initialisieren.

9. Vorrichtung nach dem vorhergehenden Anspruch, **dadurch gekennzeichnet, dass** die Initialisierungsschaltung (10) zur Aussendung eines Reset-Signals ausgebildet ist, das gleichzeitig alle Mischereinheiten (5) der parallel angelegten Daten-Verarbeitungspfade (2) der Vorrichtung (1) erreicht.

10. Vorrichtung nach einem der beiden vorangehenden Ansprüche, **dadurch gekennzeichnet, dass** zur Einstellung beliebiger Teilerverhältnisse in den Mischereinheiten (5) sog. regenerative Teiler vorgesehen sind.

11. Mobiles Endgerät mit hoher Kanalkapazität, umfassend eine Mehr-Sender- und/oder Mehr-Empfänger-Einheit (1) mit Signalverarbeitungs- bzw. Empfangs- und/oder Sendepfaden (2) jeweils zur Verbindung mit einer von räumlich verteilt angeordneten Antennen, wobei die Mehr-Sender- und/oder Mehr-Empfänger-Einheit (1) eine zeitweise abschaltbare Signalverarbeitung aufweist,
**dadurch gekennzeichnet,**
**dass** die Mehr-Sender- und/oder Mehr-Empfänger-Einheit (1) eine Mehr-Sender- und/oder Mehr-Empfänger-Einheit (1) gemäss einem der Ansprüche 8 bis 10 ist; und/oder
**dass** das mobile Endgerät zur Umsetzung eines Verfahren nach einem oder mehreren der Ansprüche 1 bis 7 ausgebildet ist, indem mindestens eine Initialisierungsschaltung (10) Mischereinheiten (5) in Signalverarbeitungs- bzw. in den einzelnen Empfangs- und/oder Sendepfaden (2) der Mehr-Sender- und/oder Mehr-Empfänger-Einheit (1) gleichzeitig initialisiert.

12. Mobiles Endgerät nach Anspruch 11 in Form eines Mobilfunkgeräts.

## Claims

1. A sending and/or receiving method with high channel capacity for a multi-sender and/or multi-receiver unit (1) comprising mixing units (5), in which a signal processing is subjected to phases of temporary deactivations,
**characterized in that**
a simultaneous initialization of the mixing units (5) is performed upon activation of the signal processing.

2. The method according to claim 1, **characterized in that** it uses the special form of a temporary deactivation in form of sending and/or receiving within defined time slots.

3. The method according to one of the preceding claims, **characterized in that** a reset signal is used which simultaneously addresses all mixing units (5) of data processing paths (2) arranged in parallel.

4. The method according to one of the preceding claims, **characterized in that** a defined preload is used in all mixing units (5).

5. The method according to the preceding claim, **characterized in that** the dividers (6) and frequency translators respectively are controlled within the respective mixing units (5).

6. The method according to one of the preceding claims, **characterized in that** so-called regenerative dividers are used as dividers (6) and frequency translators respectively.

7. Method according to the preceding claim, **characterized in that** the reset is implemented via a switch in at least one feedback branch of each of the regenerative dividers (6).

8. Multi-sender and/or multi-receiver unit (1) of high channel capacity comprising receiving and/or sending paths (2) each for connection to one of spatially distributed antennas, wherein the multi-sender and/or multi-receiver unit (1) has a temporarily deactivatable signal processing,
**characterized in that**
the multi-sender and/or multi-receiver unit (1) is adapted to perform one of the methods according to one or more of the preceding claims wherein an initialization circuit (10) is provided which is connected to the mixing units (5) in the individual receiving and/or sending paths (2) for initialization of the respective mixing units (5) upon activation of the signal processing and is designed to simultaneously initialize the mixing units (5) upon activation of the signal processing.

9. Apparatus according to the preceding claim **characterized in that** the initialization circuit (10) is designed to send out a reset signal which simultaneously reaches all the mixing units (5) of the data processing paths (2) arranged in parallel of the apparatus (1).

10. Apparatus according to one of the two preceding claims **characterized in that** so-called regenerative dividers are provided for adjusting arbitrary dividing proportions in the mixing units (5).

11. Mobile terminal with high channel capacity comprising a multi-sender and/or multi-receiver unit (1) with signal processing paths and receiving and/or sending paths (2) respectively each for connection to one of spatially distributed antennas, wherein the multi-sender and/or multi-receiver unit (1) has a temporarily deactivatable signal processing,
**characterized in that**
the multi-sender and/or multi-receiver unit (1) is a multi-sender and/or multi-receiver unit (1) according to one of the claims 8 to 10; and/or
the mobile terminal is adapted to implement a method according to one or more of the claims 1 to 7 wherein at least one initialization circuit (10) simultaneously initializes mixing units (5) in signal processing paths and in the individual receiving and/or sending paths (2) respectively of the multi-sender and/or multi-receiver unit (1).

12. Mobile end device according to claim 11 in form of a mobile radio device.

## Revendications

1. Procédé de transmission et/ou réception avec une haute capacité de canal pour une unité (1) multi-transmetteur et/ou multi-récepteur comprenant des unités de mixage (5) dans lequel un traitement du signal est soumis à des phases de désactivations temporelles,
**caractérisé en ce qu'**
une initialisation simultanée des unités de mixage (5) est effectuée lors de l'activation du traitement du signal.

2. Procédé selon la revendication 1 **caractérisé en ce qu'**il utilise la forme spéciale de la désactivation temporelle sous forme d'une transmission et/ou d'une réception dans des intervalles de temps définis.

3. Procédé selon l'une des revendications précédentes **caractérisé en ce qu'**un signal de reset est utilisé qui simultanément adresse toutes les unités (5) de mixage des chemins (2) de traitement de données aménagés en parallèle.

4. Procédé selon l'une des revendications précédentes **caractérisé en ce qu'**une précharge définie est utilisée dans toutes les unités (5) de mixage.

5. Procédé selon la revendication précédente **caractérisé en ce que** les diviseurs (6) respectivement les translateurs de fréquence sont commandés dans les unités (5) de mixage respectives.

6. Procédé selon l'une des revendications précédentes **caractérisé en ce que** des diviseurs dits régénérateurs sont utilisés comme des diviseurs (6) respectivement des translateurs de fréquence.

7. Procédé selon la revendication précédente **caractérisé en ce que** le reset est réalisé par un commutateur dans au moins une branche de rétroaction de chaque diviseur régénérateur (6).

8. Unité (1) multi-transmetteur et/ou multi-récepteur de haute capacité de canal avec des chemins de réception et/ou transmission (2) chacun pour la connexion avec une d'antennes spatialement distribuées, l'unité multi-transmetteur et/ou multi-récepteur (1) comportant un traitement du signal temporellement désactivable,
**caractérisé en ce que**
l'unité (1) multi-transmetteur et/ou multi-récepteur est adaptée à effectuer un procédé selon l'une ou plusieurs des revendications précédentes, étant prévu un circuit d'initialisation (10) qui est connecté avec des unités de mixage (5) dans les chemins individuels de réception et/ou transmission (2) pour l'initialisation des unités respectives (5) lors de l'activation du traitement du signal et est conçu à simultanément initialiser les unités (5) de mixage lors de l'activation du traitement du signal.

9. Dispositif selon la revendication précédente **caractérisé en ce que** le circuit d'initialisation (10) est adapté à l'émission d'un signal de reset qui simultanément atteint toutes les unités de mixage (5) des chemins (2) de traitement de données parallèlement arrangés du dispositif (1).

10. Dispositif selon l'une des deux revendications précédentes **caractérisé en ce que** des diviseurs dits régénérateurs sont prévus dans les unités de mixage (5) pour l'adjustage de proportions quelconques de diviseurs.

11. Terminal mobile avec haute capacité de canal comprenant une unité (1) multi-transmetteur et/ou multi-récepteur avec des chemins (2) de traitement du signal respectivement des chemins de réception et/ou de transmission chacun pour la connexion avec une d'antennes spatialement distribuées, l'unité (1) multi-transmetteur et/ou multi-récepteur comportant un traitement du signal temporellement désactivable,
**caractérisé en ce que**
l'unité (1) multi-transmetteur et/ou multi-récepteur est une unité (1) multi-transmetteur et/ou multi-récepteur selon l'une des revendications 8 à 10; et/ou
le terminal mobile est adapté à la réalisation d'un procédé selon l'une ou plusieurs des revendications 1 à 7, au moins un circuit d'initialisation (10) simultanément initialisant des unités (5) de mixage dans des chemins de traitement du signal respectivement dans des chemins (2) individuels de réception et/ou de transmission de l'unité (1) multi-transmetteur et/ou multi-récepteur.

12. Terminal mobile selon la revendication 11 sous forme d'un dispositif de radiocommunication mobile.
